Europäisches Patentamt

European Patent Office

Office européen des brevets

(11) Numéro de publication: **0 482 492 B1**

(12) **FASCICULE DE BREVET EUROPEEN**

(45) Date de publication de fascicule du brevet: **12.07.95** (51) Int. Cl.⁶: **D04H 3/05**, B29D 30/38, B29C 70/00

(21) Numéro de dépôt: **91117637.8**

(22) Date de dépôt: **15.10.91**

(54) Procédé et dispositif pour appliquer des fils sur un support utilisant un tambour avec des dents mobiles, nappe obtenue et article comportant une telle nappe (pneu).

(30) Priorité: **22.10.90 FR 9013157**

(43) Date de publication de la demande:
**29.04.92 Bulletin 92/18**

(45) Mention de la délivrance du brevet:
**12.07.95 Bulletin 95/28**

(84) Etats contractants désignés:
**AT BE CH DE DK ES FR GB GR IT LI LU NL SE**

(56) Documents cités:
**EP-A- 0 024 794**
**EP-A- 0 318 791**
**FR-A- 2 306 063**

(73) Titulaire: **COMPAGNIE GENERALE DES ETA-BLISSEMENTS MICHELIN - MICHELIN & CIE**
**12, Cours Sablon**
**F-63040 Clermont-Ferrand Cédex (FR)**

(72) Inventeur: **Carrier, Gilles**
**Surat**
**F-63720 Ennezat (FR)**

(74) Mandataire: **Doussaint, Jean-Marie et al**
**MICHELIN & CIE**
**Service K. Brevets**
**23, Place des Carmes**
**F-63040 Clermont-Ferrand Cedex (FR)**

Rank Xerox (UK) Business Services
(3.10/3.09/3.3.3)

## Description

L'invention concerne les dispositifs et les procédés permettant d'appliquer des fils sur des supports, notamment des supports en matières plastiques ou en caoutchouc, ces dispositifs et ces procédés permettant par exemple la réalisation de nappes de renfort, notamment des nappes de renfort pour enveloppes de pneumatiques. L'invention concerne en particulier les procédés et les dispositifs qui permettent d'appliquer des fils sur un support en leur donnant une forme sinueuse.

Des dispositifs permettant d'appliquer des fils sur un support en leur donnant une forme sinueuse sont décrits par exemple dans les brevets ou demandes de brevets suivants : FR 2 042 859, FR 2 325 497, FR 2 501 126, SU 704 816, WO 81/1151.

Ces dispositifs présentent au moins un des inconvénients suivants :

- complexité des dispositifs donnant lieu à des pannes fréquentes, ou nécessitant un entretien coûteux et fréquent ;
- manque de précision dans la pose des fils, de telle sorte que les nappes obtenues ont une géométrie hétérogène et présentent de ce fait des caractéristiques physiques qui varient suivant leur longueur.

La demande EP-A 318 791 décrit un dispositif permettant d'appliquer des fils sur un support en utilisant deux pinces, une pince avant et une pince arrière, dans la direction de progression du support et des fils, le dispositif comportant des moyens permettant d'ouvrir et de fermer les pinces, et des moyens permettant de déplacer la pince arrière suivant la direction de progression, ou suivant une direction inverse à la direction de progression, ainsi que des moyens pour déplacer les fils dans des directions transversales. Le dispositif décrit dans cette demande EP-A-318 791 permet de déposer les fils avec une grande précision mais la vitesse de pose est relativement lente, par suite de la succession complexe des mouvements des pinces, qui nécessitent des arrêts du support lors des mouvements transversaux des fils, avant qu'ils ne soient appliqués sur le support, et lors de l'application des fils sur le support.

Le but de l'invention est de remédier à ces inconvénients.

En conséquence, le procédé conforme à l'invention pour appliquer plusieurs fils sur un support, de façon à obtenir une nappe, en donnant aux fils une forme sineuse et en utilisant un tambour que l'on fait tourneer autour d'un axe, est caractérisé par les points suivants :

a) le tambour comporte des dents dont au moins une partie sont mobiles ;

b) on fait arriver les fils au contact du tambour ;

c) on entraîne les fils par la rotation du tambour et on déplace les dents mobiles qui déplacent elles-mêmes les fils à leur contact, de façon à donner aux fils une forme sinueuse sur le tambour ;

d) on fait arriver le support au contact du tambour et des fils, à un endroit où les fils ont acquis sur le tambour leur forme sinueuse pratiquement définitive ;

e) on enlève du tambour la nappe constituée par le support et par les fils au contact du support.

L'invention concerne également un dispositif pour appliquer plusieurs fils sur un support, de façon à obtenir une nappe, en donnant aux fils une forme sinueuse, le dispositif qui comporte un tambour avec des moyens, dits "moyens de rotation", permettant d'entraîner le tambour en rotation autour d'un axe, etant caractérisé par les points suivants :

a) le tambour comporte des dents dont au moins une partie sont mobiles, et le dispositif comporte des moyens, dits "moyens de déplacement" permettant de déplacer les dents mobiles ;

b) le dispositif comporte des moyens permettant de faire arriver les fils au contact du tambour ;

c) les moyens de rotation et les moyens de déplacement sont agencés de telle sorte que les fils soient entraînés par la rotation du tambour et que les dents mobiles soient déplacées, en déplaçant elles-mêmes les fils à leur contact, de façon à donner aux fils une forme sinueuse sur le tambour ;

d) le dispositif comporte des moyens permettant de faire arriver le support au contact du tambour et des fils, à un endroit où les fils ont acquis sur le tambour leur forme sinueuse pratiquement définitive ;

e) le dispositif comporte des moyens permettant d'enlever du tambour la nappe constituée par le support et par les fils au contact du support.

Le terme "fil" doit être pris dans un sens très général. Un fil peut être un "fil simple" constitué par exemple par un ou plusieurs filaments. Lorsque le fil simple est constitué par un seul filament il est appelé "monofilament" et lorsque le fil simple est constitué par plusieurs filaments, il est appelé "multifilament".

Un fil peut être d'autre part lui-même un ensemble de fils simples. A titre d'exemple, un tel ensemble est appelé "retors" lorsqu'il est constitué par plusieurs fils simples réunis par une seule opération de torsion, et un tel ensemble est appelé "câblé" losqu'il est constitué par plusieurs fils, dont au moins un est un retors, réunis par une ou plusieurs opérations de torsion.

L'invention sera aisément comprise à l'aide des exemples non limitatifs qui suivent et des figures toutes schématiques relatives à ces exemples. Sur le dessin :

- la figure 1 représente en coupe un dispositif conforme à l'invention ;
- la figure 2 représente, vu de profil, selon la flèche F représentée à la figure 1, le dispositif représenté à la figure 1, la coupe de la figure 1 étant schématisée par les segments de lignes droites I-I à la figure 2 ;
- la figure 3 représente une partie des moyens de déplacement du dispositif représenté aux figures 1 et 2 ;
- la figure 4 représente plus en détail une articulation des moyens de déplacement représentés en partie à la figure 3 ;
- les figures 5 et 6 représentent chacune une disposition des fils sur le tambour du dispositif représenté aux figures 1 et 2.

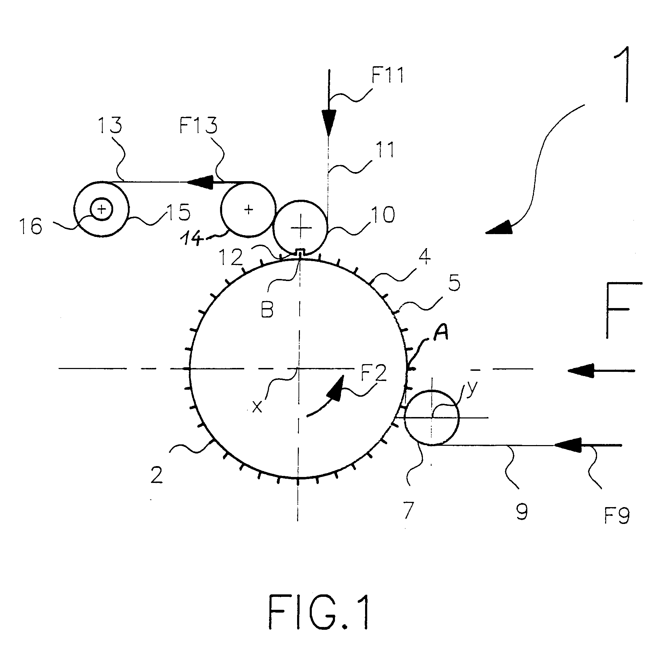

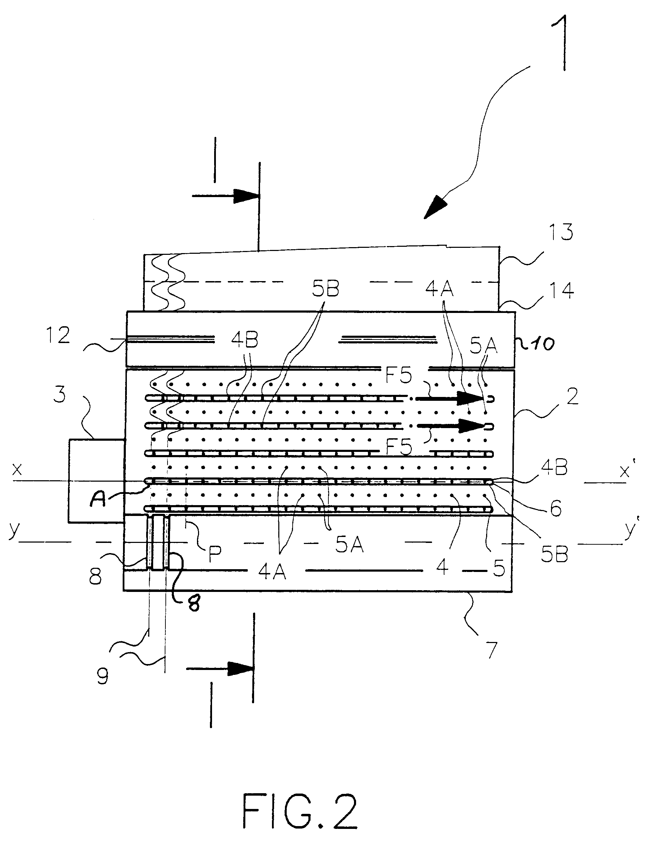

Les figures 1 et 2 représentent un dispositif 1 conforme à l'invention. Ce dispositif 1 comporte un tambour 2 de forme générale cylindrique, et un moteur 3 permettant d'entraîner le tambour 2 en rotation autour de l'axe xx'. La figure 1 est une coupe perpendiculaire à l'axe xx', qui est représenté par la lettre x sur cette figure, et la figure 2 est une vue de profil, selon la flèche F représentée à la figure 1, du dispositif 1.

La rotation du tambour 2 est schématisée par la flèche $F_2$ à la figure 1. Le tambour 2 comporte des rangées 4 de dents 5. Les rangées 4 sont chacune parallèles à l'axe xx', c'est-à-dire que chacune des rangées 4 est orientée selon une génératrice du cylindre 2. Une rangée 4 sur deux, référencée 4A est telle que ses dents 5A soient fixes, et les autres rangées, référencées 4B ont des dents 5B, qui peuvent se déplacer parallèlement à l'axe xx', c'est-à-dire selon une génératrice du cylindre 2, les rangées 4A, 4B ayant toutes le même nombre de dents. Les dents fixes 5A sont fixées directement sur le tambour 2, les dents mobiles 5B sont disposées dans des rainures 6 du tambour 2, une rainure 6 pour chaque rangée 4B. Les déplacements des dents mobiles 5B sont schématisés par les flèches F5 à la figure 2. Les moyens permettant de déplacer les dents mobiles 5B ne sont pas représentés sur les figures 1 et 2 et ils seront décrits plus en détail ultérieurement.

Le dispositif 1 comporte un rouleau 7 dont l'axe yy' est parallèle à l'axe xx', cet axe est représenté par la lettre y à la figure 1. Ce rouleau 7 comporte des gorges 8 à sa périphérie, l'axe de rotation des gorges 8 étant l'axe yy'. Le rouleau 7 permet de faire arriver des fils 9 au contact du tambour 2 et des dents 5 des rangées 4. Pour cela, les fils 9 proviennent d'un dispositif d'alimentation connu et non représenté sur le dessin dans un but de simplification. Ils passent chacun dans une gorge 8 et arrivent sur le tambour 2. L'endroit où les fils 9 arrivent au contact du tambour 2 est schématisé par la lettre A aux figures 1 et 2. A cet endroit A, les dents fixes 5A et les dents mobiles 5B des rangées 4A, 4B sont pratiquement disposées dans des plans perpendiculaires à l'axe xx', ces plans étant les mêmes pour les dents fixes 5A et les dents mobiles 5B. Dans un but de simplification, la figure 2 ne représente que deux gorges 8, deux fils 9, et un seul plan P (représenté en pointillés). Par suite de l'orientation des dents 5 dans des plans P, chaque fil 9 contacte le tambour 2 pratiquement parallèlement aux plans P selon un cercle d'axe xx', entre des couples de dents fixes 5A et entre des couples de dents mobiles 5B.

Lors de la rotation du tambour 2, à partir de l'endroit A, il se produit un déplacement des dents mobiles 5B selon les flèches $F_5$, ce qui provoque une déformation des fils entraînés par les dents 5B et ces fils 9 ne sont plus circulaires sur le tambour 2, mais prennent une forme sinueuse.

Les fils 9, entraînés par la rotation F2 du tambour 2, parviennent au rouleau 10 qui permet d'appliquer par calandrage le support 11 sur le tambour 2. Les moyens permettant d'alimenter le rouleau 10 en support 11 sont connus et ils ne sont pas représentés sur le dessin dans un but de simplification. Le rouleau 10 comporte des rainures 12 qui sont orientées selon les génératrices du rouleau 10. La disposition des rainures 12 sur le rouleau 10 est telle qu'à l'endroit où le rouleau 10 applique le support 11 sur le tambour 2, les dents 5A, 5B traversent le support 11 et se trouvent disposées dans les rainures 12, sans toucher le rouleau 10. Cet endroit est référencé B à la figure 1. Pour la simplicité du dessin, l'arrivée du support 11 n'est pas représentée à la figure 2, et une seule rainure 12 est représentée sur les figures 1 et 2.

La nappe 13 constituée par le support 11 et les fils 9 sinueux appliqués sur ce support passe ensuite entre le rouleau 10 et un rouleau 14 d'extraction, et on enroule la nappe 13 sur la bobine 15 actionnée par le moteur 16. Les axes des rouleaux 10, 14 et de la bobine 15 ne sont pas référencés sur le dessin et sont parallèles aux axes xx', yy'.

Les progressions des fils 9, du support 11 et de la nappe 13 sont représentées respectivement par les flèches F9, F11 et F13 à la figure 1.

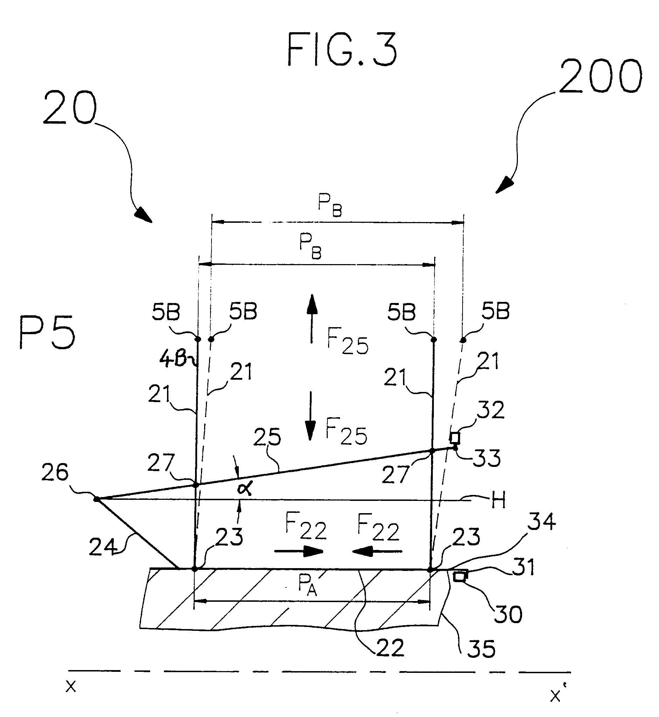

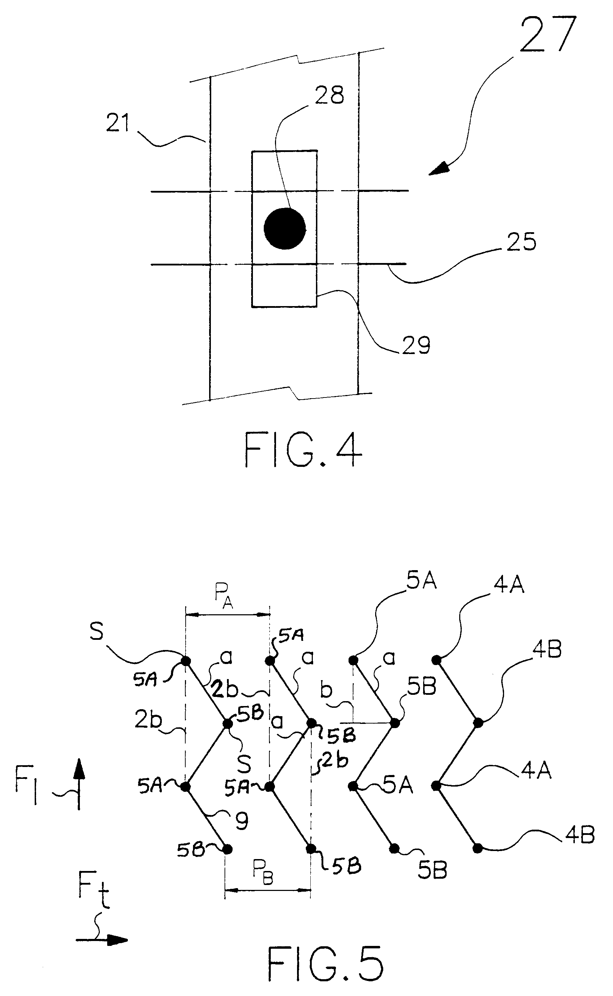

Les moyens 20 qui permettent de déplacer les dents mobiles 5B sont représentés en partie à la figure 3. Les dents mobiles 5B correspondant à une rangée 4B constituent les extrémités de biellettes 21 qui sont reliées à une barre 22 par des rotules 23 qui permettent d'incliner les biellettes 21 par rapport à la barre 22. La barre 22 est parallèle à l'axe xx' dans sa partie où se trouvent les rotules 23, et elle comporte une extrémité coudée 24 qui est reliée à un levier 25 par une articulation 26. Les biellettes 21 sont également reliées au levier 25 par des articulations 27. La figure 4 représente plus en détail une telle articulation 27. Cette articulation 27 est constituée par un ergot 28 fixé sur le levier 25 et pénétrant dans une fenêtre 29 pratiquée dans la biellette 21 de façon à permettre un déplacement de l'ergot 28 dans le sens de la longueur de la biellette 21. La came 30 agit sur l'extrémité 31 de la barre 22 de façon à déplacer en bloc l'ensemble 200 constitué par les biellettes 21, la barre 22, le levier 25, les rotules 23 et les articulations 26, 27, ce déplacement, schématisé par les flèches F22 à la figure 3, étant parallèle à l'axe xx'.

La came 32 agit sur l'extrémité 33 du levier 25, ce qui permet d'incliner les biellettes 21 par rapport à la barre 22 grâce aux articulations 23, 26, 27. Le déplacement du levier 25 est schématisé par les flèches F25 à la figure 3. Les biellettes 21 sont perpendiculaires à l'axe xx' lorsque la came 32 est sans action sur le levier 25, et ces biellettes sont inclinées d'un angle différent de 90° par rapport à l'axe xx', lorsque la came 32 agit sur le levier 25.

La barre 22 se déplace parallèlement à l'axe xx' en étant guidée dans une rainure 34 du moyeu 35 du tambour 2, un ressort de rappel, non représenté sur le dessin, permettant le retour de la barre 22 à sa position initiale lorsqu'elle n'est pas soumise à l'action de la came 30.

Les biellettes 21 sont guidées par la rainure 6 correspondant à la rangée 4B de ces biellettes, cette rainure étant parallèle à l'axe xx', de telle sorte que l'ensemble 200 correspondant à cette rangée 4B est disposé dans un plan P5 (plan de la figure 3) comprenant l'axe xx'. La disposition est analogue pour les autres rangées 4B, c'est-à-dire qu'il y a autant d'ensembles 200 que de rangées 4B.

Pour simplifier l'exposé, on a supposé que chaque biellette 21 était prolongée par une seule dent 5B, mais l'invention s'applique au cas où chaque biellette 21 est prolongée par plusieurs dents disposées dans le plan P5.

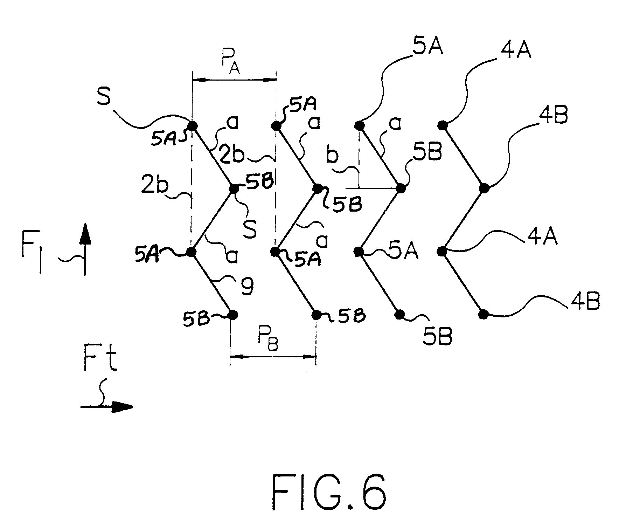

Les figures 5 et 6 représentent chacune des portions de quatre fils 9 disposés sur le tambour 2 lors de la réalisation de la nappe 13, à l'endroit B, c'est-à-dire au moment où le support 11 est appliqué contre les fils 9. Sur les figures 5 et 6, la direction longitudinale, c'est-à-dire la direction moyenne des fils 9, correspondant à des cercles du tambour 2 d'axe xx', est représentée par F1 et la direction transversale, correspondant aux génératrices du tambour 2, est représentée par la flèche Ft.

Les fils 9 des figures 5 et 6 ont tous une forme sinueuse. Par définition, le taux T d'un fil 9 est le rapport entre, d'une part, la longueur d'une portion de fil supposée rectiligne, et, d'autre part, la distance rectiligne entre les extrémités de cette portion lorsque le fil a une forme sinueuse. Aux figures 5 et 6, les fils 9 ont des tronçons pratiquement rectilignes entre deux dents 5A, 5B successives au contact de chacun de ces fils. Sur ces figures 5 et 6, la longueur de fil entre une dent 5A et une dent 5B sucessives est représentée par "a" et la distance entre deux dents 5A successives, ou entre deux dents 5B successives est représentée par 2b "b" représentant la distance entre deux rangées successives 4A, 4B, cette distance étant constante sur tout le pourtour du tambour 2. On a donc dans ce cas $T = \frac{a}{b}$. Sur ces figures 5 et 6, l'écartement entre deux dents fixes 5A successives d'une même rangée 4A est représentée par $P_A$, et l'écartement entre deux dents 5B mobiles successives d'une même rangée 4B est représentée par $P_B$.

Sur la figure 5, on a $P_A = P_B$, de telle sorte que le taux T est le même pour tous les fils 9, car "a" a la même valeur pour tous les fils 9.

Sur la figure 6, $P_A$ et $P_B$ sont différents, de telle sorte que la valeur "a" varie d'un fil à l'autre, c'est-à-dire que le taux T varie d'un fil à l'autre.

Sur la nappe terminée, les fils 9 gardent pratiquement la disposition qu'ils avaient juste avant le retrait des dents 5 dû à la rotation du tambour 2, c'est-à-dire que les sommets S des trajets sinueux des fils 9 correspondent pratiquement à la position antérieure des dents 5A, 5B.

Lorsque les moyens 20 sont mis en oeuvre de telle sorte que la came 30 agisse sur la barre 22 sans que la came 32 agisse sur le levier 25, les biellettes 21 restent perpendiculaires à la barre 22 qui est parallèle à l'axe xx', c'est-à-dire que l'écartement $P_B$ reste égal à l'écartement $P_A$, lors du déplacement, tous les fils 9 ayant alors le même taux dans la nappe 13, comme représenté à la figure 5. Lorsque les moyens 20 sont mis en oeuvre de telle sorte qu'on ait non seulement une action de la came 30 sur la barre 22 mais aussi une action de la came 32 sur le levier 25, alors, par suite des articulations 23, 26, 27 il se produit une inclinaison des biellettes 21, qui ne sont plus perpendiculaires à la barre 22, et l'écartement $P_B$ n'est plus égal à l'écartement $P_A$.

Dans un but de simplification, on n'a représenté que deux biellettes successives 21 à la figure 3. Ces biellettes sont représentées en traits pleins lorsqu'elles sont perpendiculaires à la barre 22 et elles sont représentées en pointillés lorsqu'elles sont inclinées d'un angle différent de 90°, par rapport à l'axe xx' par suite de l'action de la came 32.

Sur la figure 3, la distance entre les deux articulations 23 correspond à l'écartement $P_A$, cette distance est la même tout le long de la barre 22 pour deux biellettes 21 successives quelconques. Lorsque les biellettes 21 sont perpendiculaires à la barre 22, la distance $P_B$ est égale à la distance $P_A$.

Lorsque les biellettes 21 sont inclinées, la distance $P_B$ n'est plus égale à la distance $P_A$, mais de toute façon, grâce à la structure de l'articulation 27, on a toujours une valeur constante $P_B$ entre deux dents 5B voisines quelconques, même lorsque les biellettes 21 sont inclinées. Les moyens 20 permettent de faire varier $P_B$ de façon simple en jouant sur l'angle $\alpha$ que fait le levier 25 avec la droite H parallèle à xx' et passant par l'articulation 26.

L'invention présente les avantages suivants :

- on opère en continu, sans arrêter la rotation du tambour 2, ce qui permet d'avoir des vitesses élevées qui peuvent par exemple atteindre ou dépasser 5 m/min ;
- on obtient une nappe 13 dont les fils 9 sont disposés avec une grande régularité sur le support 11, la variation du taux T de chaque fil étant au plus égale à 1 %, et de préférence au plus égal à 0,5 %, par excès ou par défaut par rapport à une valeur nominale quelconque $T_n$, choisie pour ce fil ;
- le taux nominal $T_n$ peut varier dans de larges limites, d'un fil 9 à l'autre de la nappe 13, ce taux étant par exemple supérieur à 1 et inférieur à 3 ;
- grâce à la grande précision des taux T pour la nappe 13, celle-ci se caractérise par des propriétés mécaniques bien définies dans l'article où elle est incorporée, par exemple une enveloppe de pneumatiques, et ceci même si cet article subit une conformation lors de sa fabrication ;
- la variation du taux $T_n$ est très facile à obtenir, on peut donc modifier rapidement ce taux lors d'un fabrication, de façon à avoir une variation de $T_n$ non seulement dans le sens transversal, c'est-à-dire parallèlement à l'axe xx', mais également dans le sens longitudinal par exemple lors des réglages du dispositif, c'est-à-dire dans le sens de déroulement du fil 9 et du support 11.

Il est possible de faire disparaître la forme sinueuse des fils 9, lors de la conformation de l'article où la nappe 13 est utilisée, comme décrit dans la demande EP-A 318 791 précitée.

Les fils 9 sont de préférence des fils textiles dont le diamètre varie de 0,2 à 2 mm.

Le support 11 est par exemple une bande de caoutchouc non vulcanisé ; lors de la réalisation de la nappe 13, le support 11 de cette nappe 13 étant notamment ensuite vulcanisé, par exemple lors de la vulcanisation d'une enveloppe de pneumatique où la nappe 13 est incorporée.

L'invention couvre aussi les cas où la diminution du taux nominal $T_n$ est reversible, par exemple dans le cas d'une membrane constituée par une nappe conforme à l'invention dont le support est élastique, la déformation de cette membrane, par exemple sous l'effet de la pression d'un fluide, provoquant une diminution de ce taux, mais les fils reprenant leur taux $T_n$ initial lorsque la membrane reprend sa forme initiale. Cette membrane, réalisée par exemple en caoutchouc vulcanisé, peut servir notamment pour la confection, la conformation ou la vulcanisation d'enveloppes de pneumatiques.

Bien entendu, l'invention n'est pas limitée aux exemples de réalisation précédemment décrits. C'est ainsi par exemple que l'on peut avoir des cas où toutes les dents sont mobiles, les dents subissant des déplacements relatifs les unes par rapport aux autres, et des cas où les dents ne sont pas disposées sur des rangées.

**Revendications**

1. Procédé pour appliquer plusieurs fils sur un support, de façon à obtenir une nappe, en donnant aux fils une forme sinueuse et en utilisant un tambour que l'on fait tourner autour d'un axe, caractérisé par les points suivants :

   a) le tambour comporte des dents dont au moins une partie sont mobiles ;

   b) on fait arriver les fils au contact du tambour ;

   c) on entraîne les fils par la rotation du tambour et on déplace les dents mobiles qui déplacent elles-mêmes les fils à leur contact, de façon à donner aux fils une forme sinueuse sur le tambour ;

   d) on fait arriver le support au contact du tambour et des fils, à un endroit où les fils ont acquis sur le tambour leur forme sinueuse pratiquement définitive ;

   e) on enlève du tambour la nappe constituée par le support et par les fils au contact du support.

2. Procédé selon la revendication 1, caractérisé par les points suivants :

   f) le tambour comporte des rangées de dents, chaque rangée étant parallèle à l'axe de rotation du tambour, les rangées ayant toutes le même nombre de dents ;

   g) une rangée sur deux est telle que ses dents soient fixes, les autres rangées étant telles que leurs dents soient mobiles, et l'on déplace les dents mobiles de ces autres rangées parallèlement à l'axe de rotation du tambour ;

   h) on fait arriver les fils au contact du tambour, à un endroit où les dents fixes et mobiles sont pratiquement disposées dans des plans perpendiculaires à l'axe de rotation du tambour, ces plans étant les mêmes pour les dents fixes et les dents mobiles, les fils étant disposés parallèlement à ces plans, entre des couples de dents fixes et des couples de dents mobiles.

3. Procédé selon la revendication 2, caractérisé en ce que le déplacement des dents mobiles est obtenu en déplaçant des biellettes, dont les dents mobiles constituent les extrémités, au moyen d'une came.

4. Procédé selon l'une quelconque des revendications 2 ou 3, caractérisé en ce que l'écartement $P_A$ entre deux dents fixes successives d'une même rangée est constant sur tout le tambour et en ce que le déplacement des dents mobiles est réalisé de telle sorte que l'écartement $P_B$ entre deux dents mobiles successives d'une même rangée est constant sur tout le tambour.

5. Procédé selon la revendication 4, caractérisé en ce que le déplacement des dents mobiles est réalisé de telle sorte que l'on ait $P_A = P_B$, de façon à obtenir une nappe dont le taux nominal des fils est constant pour tous les fils de cette nappe.

6. Procédé selon la revendication 4, caractérisé en ce que le déplacement des dents mobiles est réalisé de telle sorte que $P_A$ soit différent de $P_B$, de façon à obtenir une nappe dont le taux nominal des fils varie sur cette nappe d'un fil à l'autre.

7. Dispositif pour appliquer plusieurs fils sur un support, de façon à obtenir une nappe, en donnant aux fils une forme sinueuse, le dispositif qui comporte un tambour avec des moyens, dits "moyens de rotation", permettant d'entraîner le tambour en rotation autour d'un axe, étant caractérisé par les points suivants :
   a) le tambour comporte des dents dont au moins une partie sont mobiles, et le dispositif comporte des moyens, dits "moyens de déplacement" permettant de déplacer les dents mobiles ;
   b) le dispositif comporte des moyens permettant de faire arriver les fils au contact du tambour ;
   c) les moyens de rotation et les moyens de déplacement sont agencés de telle sorte que les fils soient entraînés par la rotation du tambour et que les dents mobiles soient déplacées, en déplaçant elles-mêmes les fils à leur contact, de façon à donner aux fils une forme sinueuse sur le tambour ;
   d) le dispositif comporte des moyens permettant de faire arriver le support au contact du tambour et des fils, à un endroit où les fils ont acquis sur le tambour leur forme sinueuse pratiquement définitive ;
   e) le dispositif comporte des moyens permettant d'enlever du tambour la nappe constituée par le support et par les fils au contact du support.

8. Dispositif selon la revendication 7, caractérisé par les points suivants :
   f) le tambour comporte des rangées de dents, chaque rangée étant parallèle à l'axe de rotation du tambour, les rangées ayant toutes le même nombre de dents ;
   g) une rangée sur deux est telle que ses dents soient fixes, les autres rangées étant telles que leurs dents soient mobiles, et le dispositif comporte des moyens, dits "moyens de déplacement" permettant de déplacer les dents mobiles de ces autres rangées parallèlement à l'axe de rotation du tambour ;
   h) le dispositif comporte des moyens permettant de faire arriver les fils au contact du tambour, à un endroit où les dents fixes et mobiles sont pratiquement disposées dans des plans perpendiculaires à l'axe de rotation du tambour, ces plans étant les mêmes pour les dents fixes et les dents mobiles, les fils étant disposés parallèlement à ces plans, entre des couples de dents fixes et des couples de dents mobiles.

9. Dispositif selon la revendication 8, caractérisé en ce que les moyens de déplacement comportent, pour chaque rangée de dents mobiles, un ensemble constitué par des biellettes, dont les extrémités constituent les dents mobiles, une barre à laquelle sont reliées les biellettes par des articulations, un levier, auquel sont reliées les biellettes par des articulations, le levier et la barre étant reliés par une articulation, les moyens de déplacement comportant deux cames indépendantes, l'une susceptible d'agir sur les barres et l'autre susceptible d'agir sur les leviers, pour chaque ensemble, de telle sorte que sous l'action de la came à son contact la barre correspondant à un ensemble provoque le déplacement en bloc de tout cet ensemble parallèlement à l'axe de rotation du tambour, et que, sous l'action de la came à son contact, le levier corespondant à un ensemble provoque l'inclinaison des biellettes de cet ensemble d'un angle différent de 90° par rapport à l'axe de rotation du tambour, les biellettes étant perpendiculaires à l'axe de rotation du tambour lorsque les leviers ne sont pas soumis à l'action de la came.

**10.** Dispositif selon la revendication 9, caractérisé en ce que la distance entre deux rangées successives de dents fixes et de dents mobiles est constante sur tout le pourtour du tambour, et en ce que l'écartement $P_A$ entre deux dents fixes successives d'une même rangée est le même pour toutes les dents fixes et en ce que l'écartement $P_B$ entre deux dents mobiles successives d'une même rangée est le même pour toutes les dents mobiles, $P_A$ et $P_B$ étant égaux lorsque les leviers ne sont pas soumis à l'action de la came à leur contact, $P_A$ et $P_B$ étant différents lorsque les leviers sont soumis à l'action de cette came.

**Claims**

**1.** A method of applying a plurality of threads on a support in such a manner as to obtain a ply, while imparting a sinuous shape to the threads and using a drum which is caused to turn about an axis, characterised by the following features:

a) the drum comprises teeth, at least part of which are movable;

b) the threads are brought into contact with the drum;

c) the threads are carried along by the rotation of the drum and the movable teeth are displaced, which, in turn, displace the threads in contact with them so as to impart a sinuous shape to the threads on the drum;

d) the support is brought into contact with the drum and the threads at a place where the threads have acquired their practically final sinuous shape on the drum;

e) the ply formed by the support and the threads in contact with the support is removed from the drum:

**2.** A method according to Claim 1, characterised by the following features:

f) the drum comprises rows of teeth, each row being parallel to the axis of rotation of the drum and the rows all having the same number of teeth;

g) every second row is such that its teeth are fixed, the other rows being such that their teeth are movable, and the movable teeth of these other rows being displaced parallel to the axis of rotation of the drum;

h) the threads are brought into contact with the drum at a place where the fixed and movable teeth are practically arranged in planes perpendicular to the axis of rotation of the drum, these planes being the same for the fixed teeth and the movable teeth, the threads being arranged parallel to these planes between pairs of fixed teeth and pairs of movable teeth.

**3.** A method according to Claim 2, characterised in that the displacement of the movable teeth is obtained by displacing connecting rods, the movable teeth of which constitute the ends, by means of a cam.

**4.** A method according to any one of Claims 2 or 3, characterised in that the distance $P_A$ between two successive fixed teeth of the same row is constant over the entire drum and in that the displacement of the movable teeth is effected in such a manner that the distance $P_B$ between two successive movable teeth of the same row is constant over the entire drum.

**5.** A method according to Claim 4, characterised in that the displacement of the movable teeth is effected in such a manner that $P_A = P_B$, so as to obtain a ply, the nominal ratio of the threads of which is constant for all the threads of this ply.

**6.** A method according to Claim 4, characterised in that the displacement of the movable teeth is effected in such a manner that $P_A$ is different from $P_B$, so as to obtain a ply, the nominal ratio of the threads of which varies on this ply from one thread to the next.

**7.** A device for applying a plurality of threads on a support so as to obtain a ply, while imparting a sinuous shape to the threads, the device, which comprises a drum with means, referred to as "means of rotation", which make it possible to drive the drum in rotation about an axis, being characterised by the following features:

a) the drum comprises teeth, at least part of which are movable, and the device comprises means, referred to as "displacement means", which make it possible to displace the movable teeth;

b) the device comprises means which make it possible to cause the threads to come into contact with the drum;

c) the means of rotation and the displacement means are so arranged that the threads are driven along by the rotation of the drum and that the movable teeth are displaced, in their turn displacing the threads in contact with them so as to impart a sinuous shape to the threads on the drum;

d) the device comprises means which make it possible to cause the support to come into contact with the drum and the threads at a place where the threads have acquired their practically final sinuous shape on the drum;

e) the device comprises means which make it possible to remove from the drum the ply formed of the support and the threads in contact with the support.

8. A device according to Claim 7, characterised by the following features:

f) the drum comprises rows of teeth, each row being parallel to the axis of rotation of the drum, the rows all having the same number of teeth;

g) every second row is such that its teeth are fixed, the other rows being such that their teeth are movable, and the device comprises means, referred to as "displacement means", which make it possible to displace the movable teeth of said other rows parallel to the axis of rotation of the drum;

h) the device comprises means which make it possible to cause the threads to come into contact with the drum at a place where the fixed and movable teeth are arranged practically in planes perpendicular to the axis of rotation of the drum, these planes being the same for the fixed teeth and the movable teeth, the threads being arranged parallel to said planes between pairs of fixed teeth and pairs of movable teeth.

9. A device according to Claim 8, characterised in that the displacement means comprises, for each row of movable teeth, an assembly formed by connecting rods, the ends of which constitute the movable teeth, a bar to which the connecting rods are connected by articulations, a lever to which the connecting rods are connected by articulations, the lever and the bar being connected by an articulation, the displacement means comprising two independent cams, one capable of acting on the bars and the other capable of acting on the levers, for each assembly, such that under the action of the cam upon contact therewith the bar corresponding to an assembly causes the displacement as a unit of this entire assembly parallel to the axis of rotation of the drum, and that, under the action of the cam in contact therewith, the lever corresponding to an assembly causes the inclination of the connecting rods of this assembly by an angle other than 90° with respect to the axis of rotation of the drum, the connecting rods being perpendicular to the axis of rotation of the drum when the levers are not subjected to the action of the cam.

10. A device according to Claim 9, characterised in that the distance between two successive rows of fixed teeth and movable teeth is constant over the entire periphery of the drum, and in that the distance $P_A$ between two successive fixed teeth of the same row is the same for all the fixed teeth and in that the distance $P_B$ between two successive movable teeth of the same row is the same for all the movable teeth, $P_A$ and $P_B$ being equal when the levers are not subjected to the action of the cam in contact with them, $P_A$ and $P_B$ being different when the levers are subjected to the action of this cam.

**Patentansprüche**

1. Verfahren zum Anbringen mehrerer Fäden auf einem Träger um eine Einlage zu bilden, wobei den Fäden eine Kurvenform gegeben wird und eine Trommel verwendet wird, die um eine Achse drehangetrieben wird, gekennzeichnet durch folgende Punkte:

a) die Trommel umfaßt Zähne, von denen wenigstens ein Teil beweglich ist;

b) die Fäden werden in Berührung mit der Trommel zugeführt;

c) die Fäden werden von der Drehung der Trommel mitgenommen und die beweglichen Zähne werden verschoben, die ihrerseits die sie berührenden Fäden verschieben, um ihnen auf der Trommel eine Kurvenform zu geben;

d) der Träger wird in Berührung mit der Trommel und den Fäden an einem Ort zugeführt, an dem die Fäden auf der Trommel ihre praktisch endgültige Kurvenform erreicht haben;

e) die durch den Träger und die den Träger berührenden Fäden gebildete Einlage wird von der Trommel abgenommen.

2. Verfahren nach Anspruch 1, gekennzeichnet durch folgende Punkte:

f) die Trommel umfaßt Reihen von Zähnen, von denen jede parallel zur Drehachse der Trommel ist, und die alle die gleiche Anzahl von Zähnen haben;

g) jede zweite Reihe hat feste Zähne, die anderen Reihen haben bewegliche Zähne, und die beweglichen Zähne dieser anderen Reihen werden parallel zur Drehachse der Trommel verschoben;

h) die Fäden werden in Berührung mit der Trommel an einem Ort zugeführt, an dem die festen und die beweglichen Zähne praktisch in Ebenen senkrecht zur Drehachse der Trommel angeordnet sind, wobei diese Ebenen für die festen Zähne und die beweglichen Zähne dieselben sind und die Fäden parallel zu diesen Ebenen zwischen Paaren von festen Zähnen und Paaren von beweglichen Zähnen angeordnet werden.

3. Verfahren nach Anspruch 2, dadurch gekennzeichnet, daß die Verschiebung der beweglichen Zähne erreicht wird durch Verschieben von Schwingarmen, deren Enden von den beweglichen Zähnen gebildet werden, mittels eines Nockens.

4. Verfahren nach einem der Ansprüche 2 oder 3, dadurch gekennzeichnet, daß der Abstand $P_A$ zwischen zwei aufeinanderfolgenden festen Zähnen derselben Reihe auf der ganzen Trommel konstant ist, und daß die Verschiebung der beweglichen Zähne so durchgeführt wird, daß der Abstand $P_B$ zwischen zwei aufeinanderfolgenden beweglichen Zähnen der gleichen Reihe auf der ganzen Trommel konstant ist.

5. Verfahren nach Anspruch 4, dadurch gekennzeichnet, daß die Verschiebung der beweglichen Zähne so durchgeführt wird, daß $P_A = P_B$, so daß eine Einlage erhalten wird, bei der das Nennverhältnis der Fäden für alle Fäden der Einlage konstant ist.

6. Verfahren nach Anspruch 4, dadurch gekennzeichnet, daß die Verschiebung der beweglichen Zähne so durchgeführt wird, daß $P_A$ von $P_B$ verschieden ist, so daß eine Einlage erhalten wird, bei der das Nennverhältnis der Fäden der Einlage von einem Faden zum anderen variiert.

7. Vorrichtung zum Anbringen mehrerer Fäden auf einem Träger, um eine Einlage zu bilden, wobei den Fäden eine Kurvenform gegeben wird, welche Vorrichtung, die eine Trommel mit als Drehmittel bezeichneten Mitteln zum Antreiben der Trommel in Drehung um eine Achse umfaßt, gekennzeichnet ist durch folgende Punkte:
   a) die Trommel umfaßt Zähne, von denen wenigstens ein Teil beweglich ist, und die Vorrichtung umfaßt als Verschiebungsmittel bezeichnete Mittel zum Verschieben der beweglichen Zähne;
   b) die Vorrichtung umfaßt Mittel zum Zuführen der Fäden in Berührung mit der Trommel;
   c) die Drehmittel und die Verschiebungsmittel sind so eingerichtet, daß die Fäden von der Drehung der Trommel mitgenommen werden und die beweglichen Zähne verschoben werden, wobei sie ihrerseits die sie berührenden Fäden verschieben, um den Fäden auf der Trommel eine Kurvenform zu geben;
   d) die Vorrichtung umfaßt Mittel zum Zuführen des Trägers in Berührung mit der Trommel und den Fäden an einem Ort, an dem die Fäden auf der Trommel ihre praktisch endgültige Kurvenform angenommen haben;
   e) die Vorrichtung umfaßt Mittel zum Abnehmen der durch den Träger und die den Träger berührenden Fäden gebildeten Einlage von der Trommel.

8. Vorrichtung nach Anspruch 7, gekennzeichnet durch folgende Punkte:
   f) die Trommel umfaßt Reihen von Zähnen, wobei jede Reihe parallel zur Drehachse der Trommel ist und alle Reihen die gleiche Anzahl von Zähnen haben;
   g) jede zweite Reihe hat feste Zähne, die anderen Reihen haben bewegliche Zähne, und die Vorrichtung umfaßt als Verschiebungsmittel bezeichnete Mittel zum Verschieben der beweglichen Zähne der anderen Reihen parallel zur Drehachse der Trommel;
   h) die Vorrichtung umfaßt Mittel zum Zuführen der Fäden in Berührung mit der Trommel an einem Ort, an dem die festen und beweglichen Zähne praktisch in Ebenen senkrecht zur Drehachse der Trommel angeordnet sind, wobei diese Ebenen für die festen Zähne und die beweglichen Zähne dieselben sind und die Fäden parallel zu diesen Ebenen zwischen Paaren von festen Zähnen und Paaren von beweglichen Zähnen angeordnet sind.

9. Vorrichtung nach Anspruch 8, dadurch gekennzeichnet, daß die Verschiebungsmittel für jede Reihe von beweglichen Zähnen ein System umfassen, das gebildet ist aus Schwingarmen, deren Enden die beweglichen Zähne bilden, einem Stab, mit dem die Schwingarme durch Gelenke verbunden sind, einem Hebel, mit dem die Schwingarme durch Gelenke verbunden sind, wobei der Hebel und die Stange durch ein Gelenk verbunden sind, wobei die Verschiebungsmittel zwei unabhängige Nocken umfassen, von denen einer auf die Stangen und der andere auf die Hebel eines jeden Systems einwirken kann, so daß infolge der Wirkung des sie berührenden Nockens die einem System entsprechende Stange die Gesamtverschiebung dieses Systems parallel zur Drehachse der Trommel bewirkt, und daß unter Einwirkung des ihn berührenden Nockens der einem System entsprechende Hebel die Neigung der Schwingarme dieses Systems um einen von 90° gegen die Drehachse der Trommel verschiedenen Winkel bewirkt, wobei die Schwingarme senkrecht zur Drehachse der Trommel stehen, wenn die Hebel nicht der Einwirkung des Nockens unterliegen.

10. Vorrichtung nach Anspruch 9, dadurch gekennzeichnet, daß die Distanz zwischen zwei aufeinanderfolgenden Reihen von festen Zähnen und von beweglichen Zähnen auf dem gesamten Umfang der Trommel konstant ist, und daß der Abstand $P_A$ zwischen zwei aufeinanderfolgenden festen Zähnen der gleichen Reihe für alle festen Zähne der gleiche ist, und daß der Abstand $P_B$ zwischen zwei aufeinanderfolgenden beweglichen Zähnen der gleichen Reihe für alle beweglichen Zähne der gleiche ist und $P_A$ und $P_B$ gleich sind, wenn die Hebel nicht der Einwirkung des sie berührenden Nockens unterliegen, und $P_A$ und $P_B$ verschieden sind, wenn die Hebel der Einwirkung dieses Nokkens unterliegen.

FIG.1

FIG.2

# FIG.3

FIG.4

FIG.5

FIG.6